# EUROPEAN PATENT APPLICATION

(11) **EP 4 528 246 A1**
(43) Date of publication of application: **26.03.2025**
(21) Application number: 23198102.8
(22) Date of filing: 19.09.2023
(51) Int. Cl.: G01N 1/28, G02B 21/32, G02B 21/02, G02B 21/24, G01N 1/04

(54) **LASER MICRODISSECTION SYSTEM, TELESCOPIC SPACER RING, AND METHOD FOR LASER MICRODISSECTION**

(71) Applicant: Leica Microsystems CMS GmbH, 35578 Wetzlar (DE)
(72) Inventor: Schlaudraff, Falk, 35578 Wetzlar (DE); Hoffmann, Florian, 35578 Wezlar (DE); Greb, Christoph, 35578 Wetzlar (DE)
(74) Representative: Schaumburg und Partner Patentanwälte mbB

(57) **Abstract**

A laser microdissection system (100, 200) comprises a stage (110) configured to receive a sample (104) to be cut and a collection unit (108) comprising at least one well (106) arranged below the sample (104), the well (106) being arranged and configured to capture a dissectate (102) cut from the sample (104). The laser dissection system further comprises an objective nosepiece (112) mounting two or more objectives (114a, 114b, 204) that can be alternately pivoted into the optical axis (O) of the laser microdissection system (100, 200) for at least cutting and/or observing the sample (104). At least one of the objectives (114a, 114b, 204) is configured as a long working distance objective (114a, 204) having a working distance (WD) greater than or equal to the depth of the well (106) with a depth of at least 11.2 mm and at most 42 mm, and is configured such that the other objectives (114b) mounted by the objective nosepiece (112) do not collide with the sample (104), the collection unit (108) and/or the stage (110), when a bottom of the well (106) is in focus of the long working distance objective (114a, 204).

## Description

### Technical field

The invention relates to a laser microdissection system, and to a telescopic spacer ring. The invention further relates to a method for laser microdissection.

### Background

In laser microdissection, a sample is cut using a laser in order to isolate a small section of the sample, a so called dissectate. In the state of the art, laser microdissection systems are known that use gravity to capture the dissectate cut from the sample in a collection unit placed below the sample. The collection unit may comprise one or more wells for collecting the dissectate, for example PCR-tubes or wells of a multiwell plate.

The known microdissection systems comprise an objective nosepiece mounting multiple objectives for different tasks, for example directing the laser onto the sample for cutting or observing the sample. Another important task is observing or inspecting the well in order to, for example, determine if a dissectate is present in the well. However, depending on the depth of the well, it is impossible to observe the bottom of the well without the objective or other objectives of the objective nosepiece colliding with the sample and/or a microscope stage on which the sample is arranged. This is in particular true for deep wells, i.e. wells having a depth of 11.2 mm or more, for example the wells of a microwell plate.

### Summary

It is therefore an object to provide a laser microdissection system, a telescopic spacer ring, and a method for laser microdissection that allow for the inspection of deep wells located below the sample to be cut.

The aforementioned object is achieved by the subject-matter of the independent claims. Advantageous embodiments are defined in the dependent claims and the following description.

The proposed laser microdissection system comprises a stage configured to receive a sample to be cut and a collection unit comprising at least one well arranged below the sample, the well being arranged and configured to capture a dissectate cut from the sample. The laser microdissection system further comprises an objective nosepiece mounting two or more objectives that can be alternately pivoted into the optical axis of the laser microdissection system for at least cutting and/or observing the sample. At least one of the objectives is configured as a long working distance objective having a working distance greater than or equal to the depth of the well with a depth of at least 11.2 mm and at most 42 mm, and is configured such that the other objectives mounted by the objective nosepiece do not collide with the sample, the capture unit and/or the stage, when a bottom of the well is in focus of the long working distance objective.

The laser microdissection system is configured to cut out a portion, called the dissectate, of the sample, and to use gravity to capture the dissectate in the well of the collection unit. In order to confirm that the dissectate has been captured, the well is inspected, i.e. observed using one of the objectives arranged in the objective nosepiece. It has been recognized that the working distance of commonly used objectives is too short, making it impossible to observe the bottom of the well, in particular a well of a microwell plate such as a standard 96-well PCR plate. It has further been recognized that while objectives with a long working distance exist, they are often configured to have a parfocal distance, i.e. the distance between the mounting plane and the focal plane of the objective, such that it is approximately equal to the parfocal distance of the other objectives mounted in the same objective nosepiece, typically 45 mm or 60 mm. However, this makes it impossible to observe the bottom of the well without the objectives arranged in the objective nosepiece colliding with the sample, even when using an objective with a long working distance. The proposed solution is to adapt the long working distance objective such that the other objectives mounted by the objective nosepiece do not collide with the sample, the capture unit and/or the stage, when the bottom of the well is in focus of the long working distance objective. In other words, the parfocal distance of the long working distance objective is longer than the parfocal distance of the other objectives, and chosen such that the other objectives do not collide with the sample, the capture unit and/or the stage, when the bottom of the well is in focus of the long working distance objective. This allows for the inspection of deep wells located below the sample to be cut.

The sample may in particular be a tissue section or similarly thin biological specimen, and may be mounted by a membrane to a sample carrier. The well may be one of the wells of a microwell plate and have a depth in the range of 11.2 mm and 16 mm. The well may also be a PCR-Tube and have a depth in the range of 15 mm to 26.5 mm or up to 42 mm.

In a preferred embodiment, the stage or the objective nosepiece are moveable along the optical axis of the laser microdissection system. This allows, for example, to adjust the position of the focal plane of the objective currently pivoted into the optical axis relative to the sample. This may be used during the inspection of the well in order to find a sample that is attached to a side wall of the well. This allows the inspection to be carried out even more effectively.

In another preferred embodiment, the working distance of the long working distance objective is greater than the maximum distance between the sample and a front surface of the long working distance objective. In other words, even when the distance between the front surface of the long working distance objective and the sample is maximal, the focal plane of the long working distance objective is located below the sample, i.e. inside the well. Thus, in this embodiment, the long working distance objective is provided as a specialized objective for inspecting the well. The front surface of the long working distance objective may be an optical surface. However, most objectives comprise a ring, typically made from brass or a ceramic, arranged such that the ring protects the front lens of the objective from colliding with, for example, the stage or the sample. In such a case, the front surface is the front surface of the ring.

In another preferred embodiment, the working distance of the long working distance objective is greater than the distance between the sample and the front surface of the long working distance objective. In this embodiment, the stage and the long working distance objective are arranged at a fixed distance. The distance between the front surface of the long working distance objective and the sample is chosen such that the focal plane of the long working distance objective is located below the sample, i.e. inside the well. Thereby, the long working distance objective is provided as a specialized objective for inspecting the well.

In another preferred embodiment, the laser microdissection system comprises at least one spacer ring arranged between the long working distance objective and the objective nosepiece in order to position the long working distance objective such that the other objectives mounted by the objective nosepiece do not collide with the sample, the capture unit and/or the stage, when the bottom of the well is in focus of the long working distance objective. In this embodiment, a spacer ring is used to increase the parfocal distance of the long working distance objective such that the other objectives mounted by the objective nosepiece do not collide with the sample, the capture unit and/or the stage, when the bottom of the well is in focus of the long working distance objective. The spacer ring is a part that is used commonly in laser microdissection and microscopy in general, thereby costs are saved. Further, this embodiment allows a conventional or long working distance objective to be used as sample and cap inspection focusing objective without collisions of neighboring objectives, saving further costs.

In another preferred embodiment, the long working distance objective is dimensioned such that the other objectives mounted by the objective nosepiece do not collide with the sample, the capture unit and/or the stage, when the bottom of the well is in focus of the long working distance objective. In this embodiment, the body of the long working distance objective is extended in order to increase the parfocal distance of the long working distance objective such that the other objectives mounted by the objective nosepiece do not collide with the sample, the capture unit and/or the stage, when the bottom of the well is in focus of the long working distance objective. Thereby, the long working distance objective is provided as a specialized objective for inspecting the well.

In another preferred embodiment, the long working distance objective has a working distance of at least 11.2 mm and at most 42 mm. In particular, the long working distance objective has a working distance in the range of 11.2 mm to 16 mm and/or in the range of 15 mm to 26.5 mm, preferably 11.2 mm, 17 mm, 18 mm or 26.2 mm.

The invention also relates to a telescopic spacer ring for a laser microdissection system, configured to be arranged between an objective nosepiece and a long working distance objective of the laser microdissection system, thereby mounting the long working distance objective to the objective nosepiece. The telescopic spacer ring has a first state in which the distance between the objective nosepiece and the long working distance objective is extended by a first length, when the telescopic spacer ring is arranged between the objective nosepiece and the long working distance objective, and at least a second state in which the distance between the objective nosepiece and the long working distance objective is extended by a second length greater than the first length, when the telescopic spacer ring is arranged between the objective nosepiece and the long working distance objective. The telescopic spacer ring can be brought from the first state into the second state and vice versa.

The telescopic spacer ring allows a user to change the parfocal distance of the long working distance objective. For example, in the first state when the parfocal distance is extended by the first length, the long working distance objective may be used to observe a sample. In the second state when the parfocal distance is extended by the second length, the long working distance objective may be used to inspect a well arranged below the sample. In particular, the second length may be chosen such that the other objectives mounted by the same objective nosepiece as the long working distance objective do not collide with the sample, the capture unit and/or the stage, when the bottom of the well is in focus of the long working distance objective. Thus, the telescopic spacer ring solves the same problem and has the same advantages as the claimed laser microdissection system. In particular, the telescopic spacer ring can be supplemented with the features of the dependent claims directed at the laser microdissection system. Furthermore, the laser microdissection system described above can be supplemented with the features described in this document in connection with the telescopic spacer ring.

In a preferred embodiment, the telescopic spacer ring comprises at least two sections, preferably three sections, of progressively smaller diameters nested within each other. The sections are centered to the optical axis of the long working distance objective, when the long working distance objective is mounted by the telescopic spacer ring. The sections are coaxially arranged and can slide into each other, thereby forming a telescopic cylinder that can extend to the second length and retract to the first length. This embodiment is a mechanically simple solution for realizing the telescopic spacer ring.

In another preferred embodiment, the telescopic spacer ring comprises a manual adjustment element configured to enable the user to manually move at least one of the sections in order to bring the telescopic spacer ring from the first state into the second state and vice versa. The manual adjustment element may be an adjustment element similar to a correction collar of an objective. The manual adjustment element allows the user to manually adjust the parfocal distance of the long working distance objective.

In another preferred embodiment, the telescopic spacer ring comprises a drive unit configured to move at least one of the sections in order to bring the telescopic spacer ring from the first state into the second state and vice versa. In this embodiment, the parfocal distance of the long working distance objective may be adjusted automatically, allowing the telescopic spacer ring to be used in fully or partially automated setups. This makes the telescopic spacer ring more versatile.

In another preferred embodiment, the telescopic spacer ring is configured for use with the laser microdissection system described above. The telescopic spacer ring may be arrangeable between the objective nosepiece and the long working distance objective in order to position the long working distance objective such that the other objectives mounted by the objective nosepiece do not collide with the sample, the capture unit and/or the stage, when the bottom of the well is in focus of the long working distance objective. The first length may be such that the sample is observable using the long working distance objective when the telescopic spacer ring is in the first state. The second length may be such that the dissectate captured in the well of the collection unit is observable using the long working distance objective when the telescopic spacer ring is in the second state. In other words, the first distance is chosen such that the parfocal distance of the long working distance mounted by the telescopic spacer ring in its first state allows for an observation of the sample, and the second distance is chosen such that the parfocal distance of the long working distance mounted by the telescopic spacer ring in its second state allows for an observation of the dissectate captured in the well. Thereby, the telescopic spacer ring allows the long working distance objective to be adapted such that the other objectives mounted by the objective nosepiece do not collide with the sample, the capture unit and/or the stage, when a bottom of the well is in focus of the long working distance objective.

In another preferred embodiment, the first length is at least 7 mm and at most 14 mm and/or wherein the second length is at least 14 mm and at most 36 mm. These ranges allow mounting a typical long working distance objective with a working distance of around 26 mm and a magnification of 4x to be mounted such that the sample is observable using the long working distance objective when the telescopic spacer ring is in the first state, and that the dissectate captured in the well is observable using the long working distance objective when the telescopic spacer ring is in the second state.

The invention further relates to a method for laser microdissection using the laser microdissection system described above. The method comprises the following steps: a) Arranging the sample to be cut above the collection unit comprising the well. b) Arranging the long working distance objective in the objective nosepiece that holds at least one additional objective, wherein the long working distance objective is arranged such that the other objectives mounted by the objective nosepiece do not collide with the sample and/or the collection unit, when a bottom of the well is in focus of the long working distance objective. c) Cutting the sample such that the dissectate is collected in the well. d) Observing the dissectate in the well using the long working distance objective.

The method has the same advantages as the claimed laser microdissection system and the claimed telescopic spacer ring. In particular, the method can be supplemented with the features of the dependent claims directed at the laser microdissection system and/or the telescopic spacer ring. Furthermore, the laser microdissection system and the telescopic spacer ring described above can be supplemented with the features described in this document in connection with the method.

In a preferred embodiment the method comprises the additional steps of: Arranging the telescopic spacer ring according to any one of the claims 8 to 13 between the objective nosepiece and the long working distance objective in order to mount the long working distance objective to the objective nosepiece. Pivoting the long working distance objective into the optical axis of the laser dissection system. Bringing the telescopic spacer ring into the first state and determining a first parfocal distance of the long working distance objective. Bringing the telescopic spacer ring into the second state and determining a second parfocal distance of the long working distance objective. Preferably, the first parfocal distance is such that the sample is observable using the long working distance objective when the telescopic spacer ring is in the first state, and the second parfocal distance is such that the dissectate captured in the well is observable using the long working distance objective when the telescopic spacer ring is in the second state. The first and second parfocal distances may be saved, for example in a memory element of the laser microdissections system. Typically, the parfocal distances of the objectives arranged in the objective nosepiece are approximately equal. This allows the user to change objectives without having to make major adjustments in order to bring the sample back into focus. Since the long working distance objective has two different parfocal distances, switching to or from another objective the user may have to adjust the position of the sample or of the objective nosepiece in order to bring the sample back into focus. By determining the first and second parfocal distances, this process may be automated. Further, a warning may be generated when the user is trying to switch to the long working distance objective that a readjustment maybe necessary.

In another preferred embodiment the sample is observed using the long working distance objective when the telescopic spacer ring is in the first state, and the dissectate captured in the well is observed using the long working distance objective when the telescopic spacer ring is in the second state.

### Short Description of the Figures

Hereinafter, specific embodiments are described referring to the drawings, wherein:
- Figure 1: is a schematic view of a laser microdissection system according to an embodiment;
- Figure 2: is a schematic view of a laser microdissection system according to another embodiment;
- Figures 3A and 3B: are schematic views of the telescopic spacer ring according to an embodiment.
- Figure 4: is a flowchart of the method for laser microdissection according.

### Detailed Description

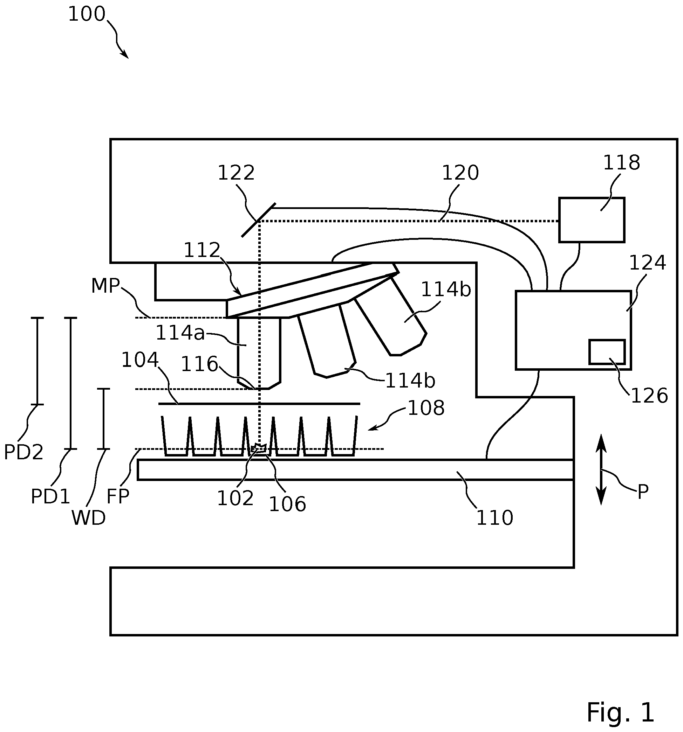

Figure 1 is a schematic view of a laser microdissection system 100 according to an embodiment.

The laser microdissection system 100 is configured to cut a portion, called the dissectate 102, out of a sample 104, for example a thin tissue section. The cut out dissectate 102 is collected in a well 106 of a collection unit 108 located below the sample 104 using gravity. This arrangement is also called laser capture microdissection.

In the embodiment shown in Figure 1, the collection unit 108 is exemplary shown as a multiwell plate comprising multiple wells 106. Alternatively, the well 106 of the collection unit 108 may be formed by a PCR-tube that may be arranged in a frame comprising multiple additional PCR-tubes. The collection unit 108 and/or individual wells 106 may be removable in order to further process the dissectate 102 outside the laser microdissection system 100.

The collection unit 108 is arranged on a stage 110 of the laser microdissection system 100. In the present embodiment, the stage 110 is configured to be moveable in order to position the collection unit 108 and the sample 104 relative to the body of the laser microdissection system 100. In particular, the stage 110 is moveable along an optical axis O of the laser microdissection system 100, i.e. the z-direction, in order to adjust the vertical position of the collection unit 108. This is indicated in Figure 1 by a double headed arrow P. However, the stage 110 may also be configured to be immovable in the z-direction.

The laser microdissection system 100 also comprises an objective nosepiece 112 mounting two or more objectives 114a, 114b. The objective nosepiece 112 is sometimes also called a turret or a revolving nosepiece. The objectives 114a, 114b mounted by the objective nosepiece 112 can be alternately pivoted into the optical axis O of the laser microdissection system 100. This allows a user to select a different objective 114a, 114b for different tasks, for example cutting the sample 104, or observing the sample 104 or the dissectate 102. In this particular embodiment, the objective nosepiece 112 is configured to be fixed with respect to the body of the laser microdissection system 100. However, in another embodiment the objective nosepiece 112 may be moveable along the optical axis O of the laser microdissection system 100, i.e. the z-direction, in order to adjust the position of the focal plane FP of the currently selected objective 114a, 114b relative to the sample 104, the dissectate 102 and/or the collection unit 108.

At least one of the objectives 114a, 114b mounted by the objective nosepiece 112 is configured as a long working distance objective 114a, having a working distance WD greater than or equal to the depth of the wells 106 of the collection unit 108. In the present embodiment, the long working distance objective 114a has an exemplary working distance WD of 26.2 mm. However, the working distance WD may be any length in the range from 11.2 mm to 42 mm. The wells 106 shown in Figure 1 have an exemplary depth of 15.5 mm. In other words, the working distance WD of the long working distance objective 114a is long enough, such that a bottom of one of the wells 106 may be observed without the long working distance objective 114a colliding with the sample 104, the collection unit 108, or the stage 110. Further, in this particular embodiment, the working distance WD of the long working distance objective 114a is greater than the maximum distance between the sample 104 and a front surface 116 of the long working distance objective 114a.

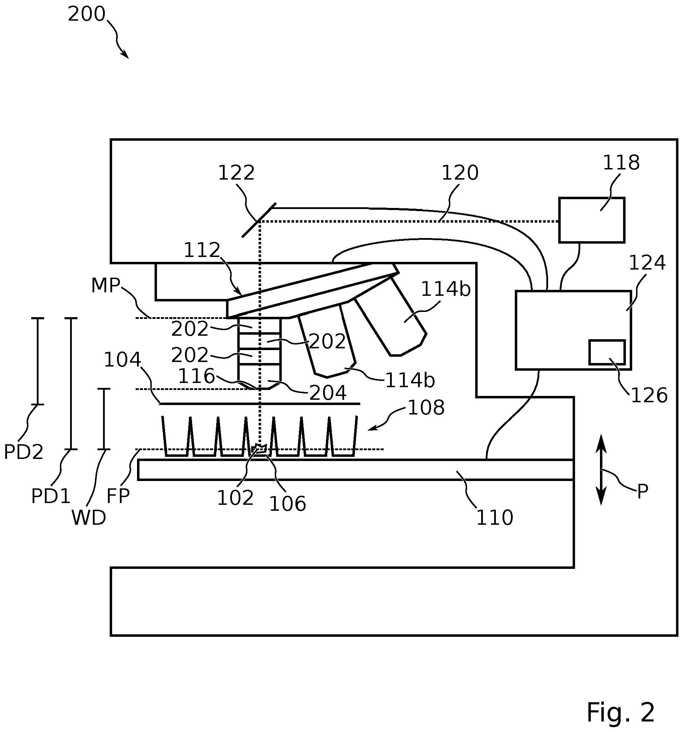

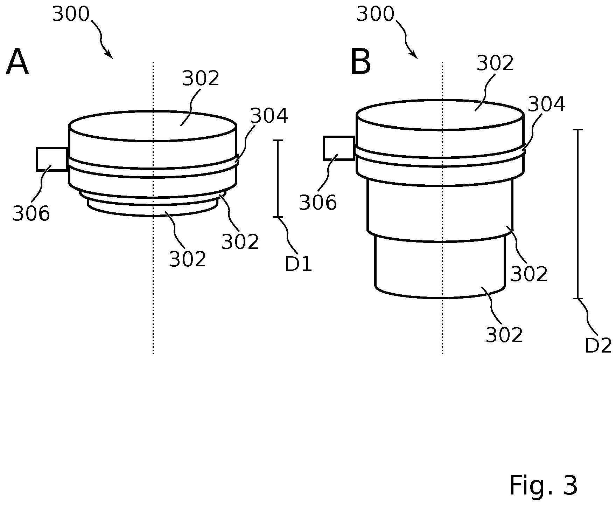

The parfocal distance PD1 of the long working distance objective 114a, i.e. the distance between a mounting plane MP and the focal plane FP of the long working distance objective 114a, is greater than the parfocal distances PD2 of the other objectives 114b mounted by the objective nosepiece 112. In the present embodiment, this is achieved by extending the body of the long working distance objective 114a, i.e. making the body of the long working distance objective 114a longer than what would be needed to accommodate the optical elements of the long working distance objective 114a. Alternative ways of extending the parfocal distance PD1 of the long working distance objective 114a are described below with reference to Figures 2, 3A, and 3B. The extended parfocal distance PD1 of the long working distance objective 114a has the effect, that the other objectives 114b mounted by the objective nosepiece 112 do not collide with the sample 104, the collection unit 108 and/or the stage 110, when the bottom of the well 106 is in focus of the long working distance objective 114a. It is therefore possible to inspect the well 106 of the collection unit 108 to check whether the dissectate 102 was correctly captured in the well 106 using the long working distance objective 114a. This is especially advantageous for deep wells, i.e. wells with a depth greater than 11.2 mm such as microwell plates or PCR-tubes, which until now could not be inspected in laser capture microdissection setups.

The laser microdissection system 100 also comprises a laser light source 118 configured to generate a laser light beam 120 for cutting the sample 104, and a deflection unit 122. The deflection unit 122 is configured to direct the laser light beam 120 into the objective 114a, 114b currently pivoted into the optical axis O of the laser microdissection system 100. The deflection unit 122 is further configured to be moveable in order to move a target point of the laser light beam 120 on the sample 104 for cutting the sample 104. In an alternative embodiment, the deflection unit 122 may be fixed, and the stage 110 maybe moveable in order to move the target point on the sample 104.

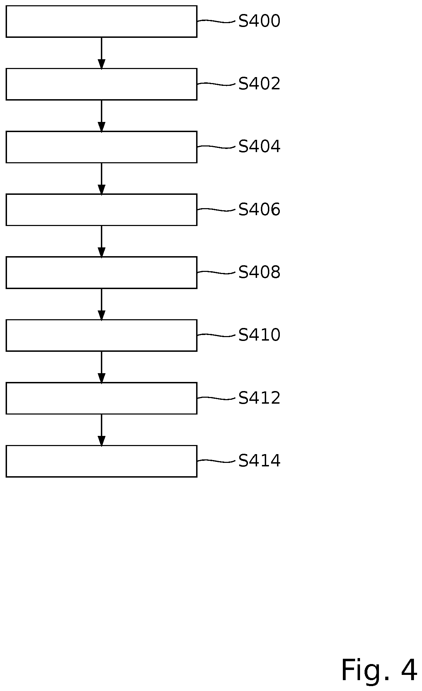

The laser microdissection system 100 further comprises a control unit 124 connected to and configured to control at least the stage 110, the objective nosepiece 112, the laser light source 118, and the deflection unit 122. The control unit 124 exemplary comprises a memory element 126 for storing data related to the control of the laser microdissection system 100, for example the parfocal distances PD1, PD2 of the objectives 114a, 114b mounted in the objective nosepiece 112. Further, the control unit 124 is configured to control the laser microdissection system 100 for performing a method for laser microdissection. The method is described below with reference to Figure 4.

Figure 2 is a schematic view of a laser microdissection system 200 according to another embodiment.

The laser microdissection system 200 according to Figure 2 is distinguished from the laser microdissection system 100 according to Figure 1 in comprising at least one spacer ring 202. The particular embodiment shown in Figure 2 comprises three spacer rings 202. The spacer rings 202 are arranged between the objective nosepiece 112 and a long working distance objective 204 in order to increase the parfocal distance PD1 of the long working distance objective 204. The long working distance objective 204 according to this embodiment has a shorter body than the long working distance objective 114a according to the embodiment shown in Figure 1. This embodiment has the advantage, that a conventional long working distance objective 204 may be used with the laser microdissection system 200, i.e. a long working distance objective 204 having an un-extended parfocal distance approximately equal to the parfocal distance PD2 of the other objectives 114b mounted by the objective nosepiece 112. Alternative to the spacer rings 202 shown in Figure 2, a telescopic spacer ring 300 may be used. The telescopic spacer ring 300 is described in the following with reference to Figures 3A and 3B.

Figures 3A and 3B are schematic views of the telescopic spacer ring 300 according to an embodiment.

The telescopic spacer ring 300 is configured for use with a laser microdissection system, in particular one of the laser microdissection systems 100, 200 described in this document.

The telescopic spacer ring 300 can be arranged between the objective nosepiece 112 and one of the objectives 114a, 114b, 204 mounted by the objective nosepiece 112 in order to mount said objective 114a, 114b, 204 to the objective nosepiece 112. The objective mounted by the telescopic spacer ring 300 may in particular be the long working distance objective 114a, 204. In the following, the function of the telescopic spacer ring 300 is described without loss of generality with respect to the long working distance objective 114a, 204.

The telescopic spacer ring 300 has a first state, shown in Figure 3A, in which the distance between the objective nosepiece 112 and the long working distance objective 114a, 204 is extended by a first length D1, when the telescopic spacer ring 300 is arranged between the objective nosepiece 112 and the long working distance objective 114a, 204. The telescopic spacer ring 300 further has a second state, shown in Figure 3B, in which the distance between the objective nosepiece 112 and the long working distance objective 114a, 204 is extended by a second length D2 greater than the first length D1, when the telescopic spacer ring 300 is arranged between the objective nosepiece 112 and the long working distance objective 114a, 204.

According to the embodiment shown in Figures 3A and 3B, the telescopic spacer ring 300 comprises three cylindrical sections 302. The sections 302 are nested within each other and have progressively smaller diameters. This allows the sections 302 to slide into each other, enabling the telescopic spacer ring 300 to extend in order to reach the second state or to retract in order to reach the first state. The sections 302 are arranged coaxially with the optical axis O of the long working distance objective 114a, 204, when the long working distance objective 114a, 204 is mounted by the telescopic spacer ring 300.

A manual adjustment element 304 of the telescopic spacer ring 300 allows the user to manually bring the telescopic spacer ring 300 from the first state into the second state and back by moving at least one of the sections 302. In this particular embodiment, the manual adjustment element 304 is formed as a ring similar to a focus ring of an objective. The telescopic spacer ring 300 may further comprise a drive unit 306 configured to automatically bring the telescopic spacer ring 300 from the first state into the second state and back. In this particular embodiment, the drive unit 306 element is configured to automatically operate the manual adjustment element 304. However, in another embodiment the drive unit 306 may be arranged and configured to move at least one of the sections 302 directly.

Figure 4 is a flowchart of the method for laser microdissection according to an embodiment.

The method may, at least in part, be performed by the control unit of the laser microdissection system 100, 200 described in this document.

The method is started in step S400. In step S402 the sample 104 to be cut is arranged above the well 106 of the collection unit 108. This step may be performed manually, for example by the user placing the sample 104 above the well 106, or automatically, for example by using the stage 110 to position the sample 104 above the well 106. In step 404 the long working distance objective 114a, 204 is arranged in the objective nosepiece 112 holding at least one additional objective 114b. The long working distance objective 114a, 204 is arranged such that the other objectives 114b mounted by the objective nosepiece 112 do not collide with the sample 104 and/or the collection unit 108, when a bottom of the well 106 is in focus of the long working distance objective 114a, 204. This step may also be performed manually, for example by placing the spacer rings 202 between the objective nosepiece 112 and the long working distance objective 114a, 204. This step may also be performed automatically by controlling the drive unit 306 of the telescopic spacer ring 300 such that the drive unit 306 brings the telescopic spacer ring 300 into its second state.

In an optional step S406 the telescopic spacer ring 300 is brought into the first state and a first parfocal distance of the long working distance objective 114a, 204 is determined. The first parfocal distance may be saved in the memory element 126 of the control unit 124. In another optional step S408 the telescopic spacer ring 300 is brought into the second state and a second parfocal distance of the long working distance objective 114a, 204 is determined. The second parfocal distance may also be saved in the memory element 126 of the control unit 124. The saved first and second parfocal distances may be used to generate warnings for the user. For example, when the user tries to change from another objective 114b to the long working distance objective 114a, 204 a warning may be issued to the user that the sample 104 currently observed will be out of focus.

In step S410 the sample 104 is cut using the laser light beam 120, and the dissectate 102 is collected in the well 106 of the collection unit 108 using gravity. In step S412 the well 106 is inspected using the long working distance objective 114a, 204, i.e. the dissectate 102 collected in the well 106 is observed using the long working distance objective 114a, 204. The method is then stopped in step S414.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: laser microdissection system
- 102: dissectate
- 104: sample
- 106: well
- 108: collection unit
- 110: stage
- 112: objective nosepiece
- 114a, 114b: objective
- 116: front surface
- 118: laser light source
- 120: laser light beam
- 122: deflection unit
- 124: control unit
- 126: memory element
- 200: laser microdissection system
- 202: spacer ring
- 204: objective
- 300: telescopic spacer ring
- 302: section
- 304: manual adjustment element
- 306: drive unit
- O: optical axis
- P: arrow
- PD1, PD2: parfocal distance
- WD: working distance

## Claims

1. Laser microdissection system (100, 200), having
a stage (110) configured to receive a sample (104) to be cut and a collection unit (108) comprising at least one well (106) arranged below the sample (104), the well (106) being arranged and configured to capture a dissectate (102) cut from the sample (104); and
an objective nosepiece (112) mounting two or more objectives (114a, 114b, 204) that can be alternately pivoted into the optical axis (O) of the laser microdissection system (100, 200) for at least cutting and/or observing the sample (104);
wherein at least one of the objectives (114a, 114b, 204) is configured as a long working distance objective (114a, 204) having a working distance (WD) greater than or equal to the depth of the well (106) with a depth of at least 11.2 mm and at most 42 mm, and is configured such that the other objectives (114b) mounted by the objective nosepiece (112) do not collide with the sample (104), the collection unit (108) and/or the stage (110), when a bottom of the well (106) is in focus of the long working distance objective (114a, 204).

2. Laser microdissection system (100, 200) according to claim 1, wherein the stage (110) or the objective nosepiece (112) are moveable along the optical axis (O) of the laser microdissection system (100, 200).

3. Laser microdissection system (100, 200) according to claim 2, wherein the working distance (WD) of the long working distance objective (114a, 204) is greater than the maximum distance between the sample (104) and a front surface (116) of the long working distance objective (114a, 204).

4. Laser microdissection system (100, 200) according to claim 1, wherein the working distance (WD) of the long working distance objective (114a, 204) is greater than the distance between the sample (104) and the front surface (116) of the long working distance objective (114a, 204).

5. Laser microdissection system (200) according to any one of the preceding claims, comprising at least one spacer ring (202) arranged between the long working distance objective (114a, 204) and the objective nosepiece (112) in order to position the long working distance objective (114a, 204) such that the other objectives (114b) mounted by the objective nosepiece (112) do not collide with the sample (104), the collection unit (108) and/or the stage (110), when the bottom of the well (106) is in focus of the long working distance objective (114a, 204).

6. Laser microdissection system (100) according to any one of the claims 1 to 4, wherein the long working distance objective (114a, 204) is dimensioned such that the other objectives (114b) mounted by the objective nosepiece (112) do not collide with the sample (104), the collection unit (108) and/or the stage (110), when the bottom of the well (106) is in focus of the long working distance objective (114a, 204).

7. Laser microdissection system (100, 200) according to any one of the preceding claims, wherein the long working distance objective (114a, 204) has a working distance (WD) of at least 11.2 mm and at most 42 mm.

8. Telescopic spacer ring (300) for a laser microdissection system (100, 200), configured to
be arranged between an objective nosepiece (112) and a long working distance objective (114a, 204) of the laser microdissection system (100, 200), thereby mounting the long working distance objective (114a, 204) to the objective nosepiece (112),
the telescopic spacer ring (300) having a first state in which the distance between the objective nosepiece (112) and the long working distance objective (114a, 204) is extended by a first length (D1), when the telescopic spacer ring (300) is arranged between the objective nosepiece (112) and the long working distance objective (114a, 204), and
at least a second state in which the distance between the objective nosepiece (112) and the long working distance objective (114a, 204) is extended by a second length (D2) greater than the first length (D1), when the telescopic spacer ring (300) is arranged between the objective nosepiece (112) and the long working distance objective (114a, 204),
wherein the telescopic spacer ring (300) can be brought from the first state into the second state and vice versa.

9. Telescopic spacer ring (300) according to claim 8, comprising at least two sections (302), preferably three sections (302), of progressively smaller diameters nested within each other, the sections (302) being centered to the optical axis (O) of the long working distance objective (114a, 204), when the long working distance objective (114a, 204) is mounted by the telescopic spacer ring (300).

10. Telescopic spacer ring (300) according to claim 9, comprising a manual adjustment element (304) configured to enable a user to manually move at least one of the sections (302) in order to bring the telescopic spacer ring (300) from the first state into the second state and vice versa.

11. Telescopic spacer ring (300) according to claim 9 or 10, comprising a drive unit (306) configured to move at least one of the sections (302) in order to bring the telescopic spacer ring (300) from the first state into the second state and vice versa.

12. Telescopic spacer ring (300) according to any one of the claims 8 to 11, configured for use with the laser microdissection system (100, 200) according to any one of the claims 1 to 7, wherein the telescopic spacer ring (300) is arrangeable between the objective nosepiece (112) and the long working distance objective (114a, 204) in order to position the long working distance objective (114a, 204) such that the other objectives (114b) mounted by the objective nosepiece (112) do not collide with the sample (104), the collection unit (108) and/or the stage (110), when the bottom of the well (106) is in focus of the long working distance objective (114a, 204); wherein the first length (D1) is such that the sample (104) is observable using the long working distance objective (114a, 204) when the telescopic spacer ring (300) is in the first state; and wherein the second length (D2) is such that the dissectate (102) captured in the well (106) of the collection unit (108) is observable using the long working distance objective (114a, 204) when the telescopic spacer ring (300) is in the second state.

13. Telescopic spacer ring (300) according to any one of the claims 8 to 12, wherein the first length (D1) is at least 7 mm and at most 14 mm and/or wherein the second length (D2) is at least 14 mm and at most 36 mm.

14. Method for laser microdissection using the laser microdissection system (100, 200) according to any one of the claims 1 to 7, the method comprising the following steps:
a) arranging the sample (104) to be cut above the collection unit (108) comprising the well (106);
b) arranging the long working distance objective (114a, 204) in the objective nosepiece (112) that holds at least one additional objective (114b), wherein the long working distance objective (114a, 204) is arranged such that the other objectives (114b) mounted by the objective nosepiece (112) do not collide with the sample (104) and/or the collection unit (108), when a bottom of the well (106) is in focus of the long working distance objective (114a, 204);
c) cutting the sample (104) such that the dissectate (102) is collected in the well (106); and
d) observing the dissectate (102) in the well (106) using the long working distance objective (114a, 204).

15. Method for laser microdissection according to claim 14, comprising the additional steps of:
arranging the telescopic spacer ring (300) according to any one of the claims 8 to 13 between the objective nosepiece (112) and the long working distance objective (114a, 204) in order to mount the long working distance objective (114a, 204) to the objective nosepiece (112);
pivoting the long working distance objective (114a, 204) into the optical axis (O) of the laser dissection system;
bringing the telescopic spacer ring (300) into the first state and determining a first parfocal distance of the long working distance objective (114a, 204); and
bringing the telescopic spacer ring (300) into the second state and determining a second parfocal distance of the long working distance objective (114a, 204).
